(19) Europäisches Patentamt / European Patent Office / Office européen des brevets

(11) **EP 2 396 573 B1**

(12) **FASCICULE DE BREVET EUROPEEN**

(45) Date de publication et mention
de la délivrance du brevet:
**15.11.2017 Bulletin 2017/46**

(21) Numéro de dépôt: **10702702.1**

(22) Date de dépôt: **08.02.2010**

(51) Int Cl.:
*F16J 15/02* *(2006.01)*        *B60H 1/00* *(2006.01)*

(86) Numéro de dépôt international:
**PCT/EP2010/051514**

(87) Numéro de publication internationale:
**WO 2010/092024 (19.08.2010 Gazette 2010/33)**

(54) **Dispositif d'étanchéité**

Dichtungsanordnung

Seal assembly

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **13.02.2009 FR 0900659
24.07.2009 FR 0903671**

(43) Date de publication de la demande:
**21.12.2011 Bulletin 2011/51**

(73) Titulaire: **Valeo Systèmes Thermiques
78321 Le Mesnil Saint Denis (FR)**

(72) Inventeurs:
• **AUBRY, Franck**
  **F-28230 Droue Sur Drouette (FR)**
• **RIGNAULT, Hervé**
  **F-91190 Gif Sur Yvette (FR)**
• **VAN SCHAMMELOUT, Cédric**
  **F-92800 Puteaux (FR)**
• **SCALONE, Orlando**
  **F-95100 Argenteuil (FR)**

(74) Mandataire: **Metz, Gaëlle
Valeo Systèmes Thermiques
8, rue Louis Lormand
CS 80517 La Verrière
78322 Le Mesnil Saint Denis Cedex (FR)**

(56) Documents cités:
WO-A-02/14719            DE-A1-102005 054 070
DE-A1-102007 036 471     DE-B3-102006 016 854
FR-A- 2 480 892          FR-A- 2 747 172
FR-A- 2 768 101

EP 2 396 573 B1

**Description**

La présente invention est du domaine des dispositifs d'étanchéité. Principalement, elle concerne un joint d'étanchéité. L'invention trouve une application particulièrement avantageuse dans le domaine de l'industrie automobile, et notamment dans celui de l'intégration des équipements de climatisation à des interfaces définies par les constructeurs de véhicules.

De façon générale, les équipements de climatisation des véhicules automobiles sont prévus pour assurer les fonctions de chauffage, de ventilation et/ou de climatisation de l'habitacle du véhicule dans lequel est installé l'équipement de climatisation, généralement regroupées sous le terme d'HVAC (pour l'appellation anglophone "Heating, Ventilating and/or Air Conditioning").

La plupart des véhicules automobiles sont aujourd'hui équipés d'un boîtier de climatisation constitué d'une enceinte en matière plastique dans laquelle sont disposés les divers composants nécessaires au traitement thermique d'un flux d'air de climatisation apte à être diffusé dans l'habitacle du véhicule.

Le boîtier de climatisation est monté dans le véhicule contre une paroi pare-feu séparant le compartiment moteur et l'habitacle du véhicule. De nombreuses ouvertures d'entrée et de sortie d'air permettent le traitement thermique et la circulation du flux d'air de climatisation. En particulier, le boîtier de climatisation communique avec une boucle de climatisation disposée en majeure partie dans le compartiment moteur et une entrée d'air extérieur située également dans le compartiment moteur, tandis que des sorties d'air, notamment de dégivrage et d'aération, assurent la distribution du flux d'air de climatisation dans l'habitacle.

Le constructeur automobile prévoit des interfaces pour accueillir les équipements devant être installés dans l'habitacle du véhicule. Ainsi, l'intégration du boîtier de climatisation à l'interface destiné à le recevoir, en particulier une planche de bord du véhicule et/ou un boîtier d'entrée d'air, doit être réalisée avec soin de manière à assurer la meilleure étanchéité possible entre les conduits de circulation d'air, notamment de dégivrage et d'aération et/ou un conduit d'entrée d'air, prévus dans l'interface et les ouvertures d'air dédiées du boîtier de climatisation. L'étanchéité entre les conduits eux-mêmes doit également être prise en considération.

En pratique, cette étanchéité est obtenue au moyen de joints en mousse à base de polyuréthane (PU), de polyéthylène (PE), de polychlorure de vinyle (PVC), ou de caoutchouc cellulaire en éthylène propylène diène monomère (EPDM).

De manière connue, les joints d'étanchéité sont collés ou fixés sur un ou plusieurs composants du boîtier de climatisation, comme les entrées et les sorties d'air, les distributeurs et répartiteurs d'air, etc.

Il peut s'agir, par exemple, de joints évasés surmoulés à une grille de sortie d'air côté moteur, clippée sur le boîtier de climatisation afin d'assurer l'étanchéité à l'air avec le capot.

Par ailleurs, dans le cas des groupes moto-ventilateurs agencés dans un conduit pour une zone arrière de l'habitacle du véhicule notamment, l'étanchéité entre deux tubes est obtenue par emmanchement coulissant et est réalisée par des joints annulaires recourbés, également surmoulés.

Cependant, ces joints d'étanchéité connus présentent tous un certain nombre d'inconvénients. On notera, par exemple, que les joints, tels que ceux mentionnés précédemment, nécessitent que l'assemblage par accostage entre les deux équipements se fasse dans une direction parfaitement normale à la face de l'équipement portant le joint, ceci afin d'éviter toute variabilité de compression du joint et/ou tous retournements non désirés du joint. L'ensemble de ces phénomènes a pour conséquence une rupture de l'étanchéité entre les équipements et des fuites d'air.

Dans le cas de tubes emmanchés par coulissement, l'alignement entre les tubes doit être également le plus rigoureux possible afin d'éviter également des compressions du joint différentes en divers points d'emmanchement. Ces différentes compressions du joint entrainent des zones de fuite d'air.

Le document FR 2 768 101 montre un exemple de dispositif d'étanchéité (Fig.1) comprenant un joint d'étanchéité (16), un premier équipement (17), un deuxième équipement (15), le premier équipement portant le joint d'étanchéité, et le deuxième équipement étant destiné à venir en contact avec le joint d'étanchéité par accostage selon une direction d'accostage donnée, le joint d'étanchéité (16) comprenant au moins une lèvre (18) en matériau déformable, la lèvre présentant :

- un corps de lèvre (18) s'étendant, depuis un pied (3) fixé au premier équipement (17), selon un profil cylindrique incliné dans une direction d'inclinaison donnée,
- un bord d'attaque (20) prolongeant le corps de lèvre dans la direction d'inclinaison donnée, le bord d'attaque présentant une zone d'accostage destinée à réaliser le contact avec le deuxième équipement, le joint d'étanchéité (16) comprenant en outre,
- d'une part, la lèvre (18) en matériau déformable, dite lèvre principale, et,
- d'autre part, une lèvre secondaire (29,30) en matériau déformable et présentant un corps de lèvre (29) s'étendant, depuis un pied de lèvre fixé au premier équipement, à l'intérieur du profil cylindrique de la lèvre principale (18) selon un profil cylindrique incliné dans une deuxième direction d'inclinaison opposée à la direction d'inclinaison de la lèvre principale,de sorte que, lors d'un accostage du deuxième équipement, le corps de lèvre (29) de la lèvre secondaire se déforme par flexion dans la deuxième direction d'inclinaison sous l'effort d'écrasement exercé par le corps de lèvre (18) de la lèvre principale, les pieds de lèvre (3,29) des lèvres principale et secondaire étant réunis en une base unique (4).

Aussi, un but de l'invention est de proposer un joint d'étanchéité, en particulier en thermoplastique élastomère (TPE), qui permette d'obtenir une grande variabilité de l'angle d'accostage, au sens où une étanchéité parfaite, sans effet de roulage ou de retournement notamment, peut néanmoins être obtenue même si la direction d'accostage varie notablement au cours du montage d'un équipement sur l'autre.

Ce but est atteint, conformément à l'invention, au moyen d'un dispositif d'étanchéité selon la revendication 1, qui comprend, entre autres, un joint d'étanchéité entre, d'une part, un premier équipement destiné à porter le joint, et, d'autre part, un deuxième équipement destiné à venir en contact avec le joint d'étanchéité par accostage selon une direction d'accostage donnée. Le joint d'étanchéité est constitué d'une pluralité de segments de joint comprenant, chacun, au moins une lèvre en matériau déformable, la lèvre présentant :

- un corps de lèvre s'étendant, depuis un pied destiné à être fixé au premier équipement, selon un profil cylindrique incliné dans une direction d'inclinaison donnée,
- un bord d'attaque prolongeant le corps de lèvre dans la direction d'inclinaison donnée, le bord d'attaque présentant une zone d'accostage, de préférence selon un profil elliptique, destinée à réaliser le contact avec le deuxième équipement.

Les segments de joint de la pluralité sont disposés de sorte que, pour toute orientation de la direction d'accostage du deuxième équipement, les corps de lèvre des segments de joint sont aptes à se déformer par flexion dans la direction d'inclinaison respective associée.

Ainsi, on comprend qu'avec cette forme de lèvre et la disposition particulière des segments de joint, on puisse obtenir une variabilité totale de la direction d'accostage dont l'angle d'orientation avec la normale à la face du premier équipement peut être compris entre 0° et 90°. Cette variabilité angulaire constitue une caractéristique particulièrement avantageuse par rapport aux joints connus qui, au contraire, exigent une direction d'accostage d'orientation parfaitement déterminée. Le montage du premier équipement sur le deuxième équipement est alors grandement facilité puisqu'il tolère sur une très grande plage de variations et autorise des mouvements aléatoires d'un équipement par rapport à l'autre, lesquels se traduisent par des variations correspondantes de l'angle de la direction d'accostage.

Selon l'invention, le profil cylindrique du corps de lèvre présente une section évolutive, diminuant du pied du corps de lèvre vers le bord d'attaque.

Cette forme particulière de corps de lèvre associée au bord d'attaque confère aux segments de joint des propriétés anti-retournement du fait que, dans la phase d'accostage, une orientation de déformation du corps de lèvre dans la direction d'inclinaison est réalisée lors du contact du deuxième équipement sur la zone d'accostage du bord d'attaque. Cette déformation est ensuite prolongée au niveau du corps de lèvre par un mouvement de flexion dans la direction d'inclinaison, ce mouvement d'accompagnement de la déformation étant facilité par la forme évolutive donnée à la section du corps de lèvre. Avantageusement, l'invention prévoit que le bord d'attaque présente également une zone anti-retournement de la lèvre prolongeant la zone d'accostage en direction du pied du corps de lèvre.

Dans un premier mode de réalisation, la zone d'accostage et/ou la zone anti-retournement présente un profil circulaire.

Dans un second mode de réalisation, la zone d'accostage et/ou la zone anti-retournement présentent un profil elliptique.

D'une manière générale, les segments de joint, notamment les segments formant la périphérie du joint, sont constitués d'une lèvre unique dont la direction d'inclinaison du corps de lèvre est déterminée par la direction d'accostage prévue au montage. Cependant, il est envisagé que le segment de joint comprend deux lèvres parallèles, les bords d'attaque des lèvres étant disposés en regard. Les segments de joint de ce type à double lèvre sont plus particulièrement destinés à assurer l'étanchéité entre deux sorties d'air du boîtier de climatisation, par exemple les sorties de dégivrage et d'aération.

Afin d'améliorer l'étanchéité et assurer la symétrie de déformation des lèvres en regard, on peut prévoir qu'au moins une paroi transversale formant chicane soit disposée entre les corps de lèvres.

Par ailleurs, il peut se produire que la surface du deuxième équipement soit affectée par des défauts importants, notamment de planéité, alors que les segments de joint destinés à venir en contact avec cette surface présentent des zones d'accostage parfaitement planes. Il en résulte que, dans cette situation, l'étanchéité ne peut être garantie.

Pour remédier à cet inconvénient, l'invention propose que le segment de joint comporte au moins une ouverture de compensation, notamment apte à compenser le défaut de planéité du deuxième équipement. Cette ouverture de compensation apporte au segment de joint la souplesse nécessaire pour s'adapter au mieux au profil de la surface de contact et donc d'absorber tout décalage, en particulier dû au défaut de planéité.

Cependant, les ouvertures de compensation ainsi pratiquées dans les segments de joint peuvent être à l'origine de fuites dommageables aux performances du joint conformément à la présente invention en termes d'étanchéité. C'est pourquoi, il est prévu par l'invention qu'un segment de joint auxiliaire d'étanchéité soit placé en regard de l'ouverture de compensation. Avantageusement, ce joint auxiliaire d'étanchéité peut être du type à double lèvre et chicanes, comme celui qui a été mentionné précédemment concernant l'étanchéité entre des sorties d'air du boîtier de climatisation.

Une autre solution proposée par l'invention afin d'assurer l'étanchéité des segments de joint consiste en ce que l'ouverture de compensation soit munie d'un film souple d'étanchéité. Dans ce cas, la compensation des défauts, notamment de planéité, est obtenue grâce à la souplesse du film, lequel assure également l'étanchéité du segment de joint.

D'autre part, s'agissant de la cinématique d'inclinaison par flexion des segments de joint les uns par rapport aux autres, et formant un angle compris entre 30 et 150° et selon un déplacement angulaire du deuxième équipement, il est prévu que, le joint selon la présente invention comprenant au moins une paire de segments de joint adjacents, la lèvre d'un segment de joint comporte une découpe ménagée le long du corps de lèvre du segment de joint. De plus, selon l'invention, la découpe comporte une paroi d'étanchéité entre les segments de joint adjacent d'une même paire de segments de joint adjacents.

De manière à éviter le retournement du bord d'attaque des segments de joint dans le cas de grandes instabilités dans le mouvement d'accostage du deuxième équipement, il y a avantage à ce que le bord d'attaque de la lèvre soit prolongé par un deuxième corps de lèvre vers un deuxième pied fixé au premier équipement afin de former un tube fermé.

De plus, afin d'éviter que des bruits générés par l'équipement de climatisation, notamment les composants du boîtier répartiteur d'air, ne parviennent à l'intérieur de l'habitacle, on utilise souvent des joints de section rectangulaire réalisés en mousse d'éthylène polyéthylène diène monomère (EPDM) qui constituent dans la plupart des cas des barrières acoustiques satisfaisantes du fait de la structure en cellules ouvertes de la mousse.

Cependant, une telle mousse ne peut être mise en oeuvre pour réaliser des joints d'étanchéité selon l'invention, lesquels sont obtenus de préférence par surmoulage d'un matériau thermoplastique élastomère.

Aussi, un autre but de l'invention est de proposer un joint d'étanchéité qui présente les mêmes avantages mécaniques en termes de variabilité de l'angle d'accostage, mais également les mêmes avantages en termes d'absorption acoustique.

Ce but est atteint grâce à un joint d'étanchéité ayant des segments de joint comprenant, chacun, d'une part, une lèvre en matériau déformable, dite lèvre principale, et, d'autre part, une lèvre secondaire en matériau déformable, parallèle à la lèvre principale, et présentant un corps de lèvre s'étendant, depuis un pied de lèvre destiné à être fixé au premier équipement, à l'intérieur du profil cylindrique de la lèvre principale selon un profil cylindrique incliné dans une direction d'inclinaison opposée à la direction d'inclinaison de la lèvre principale de sorte que, lors d'un accostage du deuxième équipement, le corps de lèvre de la lèvre secondaire se déforme par flexion dans la direction d'inclinaison sous l'effort d'écrasement exercé par le corps de la lèvre principale. Par ailleurs, les lèvres principale et secondaire forment au moins un tube fermé à l'intérieur des segments de joint.

Ainsi, avec un tel joint d'étanchéité, la lèvre principale constitue avec la lèvre secondaire un tube fermé rendu étanche par la force de rappel en flexion exercée par la lèvre secondaire contre la lèvre principale. Cette forme en tube fermé confère au joint conforme à l'invention des propriétés de barrière acoustique dont on a pu montrer qu'elles sont équivalentes à celles du joint en mousse d'EPDM mentionné plus haut.

De plus, la force de rappel en flexion générée par la lèvre secondaire tend à plaquer la lèvre principale contre la paroi du deuxième équipement, ce qui améliore encore l'étanchéité du joint.

Avantageusement, la lèvre principale et la lèvre secondaire sont respectivement disposées, sur les segments de joint agencés à l'intérieur et à l'extérieur du joint.

On peut noter que le joint d'étanchéité selon l'invention comportant une lèvre principale et une lèvre secondaire, bien que d'utilisation très large, s'applique plus particulièrement à l'interface entre le boîtier répartiteur d'air et le boîtier d'entrée d'air en tant que deuxième équipement.

Afin de faciliter le recouvrement de la lèvre secondaire par la lèvre principale et d'éviter que la lèvre secondaire ne se retourne dans une direction opposée à la direction d'inclinaison, le profil cylindrique du corps de la lèvre secondaire présente une partie proximale dirigée vers le bord d'attaque de la lèvre principale. En particulier, la partie proximale fait avec le bord d'attaque de la lèvre principale un angle supérieur ou égal à 90°.

Le recouvrement de la lèvre secondaire par la lèvre principale est également facilité si, comme le prévoit l'invention, le profil cylindrique du corps de la lèvre secondaire présente une partie distale inclinée par rapport à la partie proximale dans la direction d'inclinaison de la lèvre secondaire.

Selon l'invention, les pieds respectifs de la lèvre principale et de la lèvre secondaire sont réunis en une base unique, ceci de manière à offrir une barrière acoustique supplémentaire à celle présentée par la forme de tube fermé du joint après accostage.

Par ailleurs, il est prévu par l'invention que la base unique porte au moins une nervure centrale sur laquelle la lèvre principale vient en appui lors de l'accostage du deuxième équipement sur la lèvre principale. Cette caractéristique permet de définir une pluralité de tubes fermés successifs, ceci dans le but d'augmenter la barrière acoustique présentée par le joint. De plus, la nervure centrale forme également une butée apte à contraindre la lèvre principale contre la paroi du deuxième équipement et donc d'améliorer encore l'étanchéité du joint

Enfin, l'invention recommande que, dans un segment d'angle, le profil cylindrique de la lèvre principale soit plus large, dans la direction d'extension du corps de lèvre, que dans un segment linéaire. L'intérêt de cette disposition est d'éviter que dans une portion du joint disposé dasn une zone angulaire, la lèvre principale ne se raccourcisse de manière excessive par un effet de contraction, au point de ne plus pouvoir recouvrir la lèvre secondaire lors de l'accostage du deuxième équipement.

Avantageusement, le joint d'étanchéité est en thermoplastique élastomère (TPE).

En résumé, les avantages de la présente invention sont les suivants :

- une meilleure étanchéité obtenue quelle que soit la direction d'accostage du deuxième équipement avec prise en compte des défauts éventuels de la surface de contact,
- une élimination des effets de roulage, de retournement et d'accrochage des lèvres dus aux frottements sur le bord d'attaque,
- une économie de matière puisque le joint d'étanchéité en thermoplastique élastomère selon l'invention étant surmoulé dans un moule par une presse d'injection conventionnelle, il n'est plus nécessaire de s'approvisionner en produits semi-finis en mousse prédécoupée ou en bande au mètre auprès d'un fournisseur,
- une économie en temps d'assemblage et de contrôle de pose du joint
- une réduction des bruits provenant du boîtier répartiteur d'air par formation d'une barrière acoustique dans le joint...

D'autres caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation mais aussi, le cas échéant, contribuer à sa définition sur lesquels:

- Les figures 1a et 1b sont respectivement des vues de dessus et de côté d'un boîtier répartiteur d'air muni d'un joint d'étanchéité conformément à l'invention,
- La figure 2 est une vue en perspective du joint d'étanchéité conformément à l'invention,
- La figure 3a est une vue en perspective d'un premier mode de réalisation d'une lèvre d'un joint d'étanchéité conformément à l'invention,
- Les figures 3b et 3c sont des schémas de dimensionnement respectivement du bord d'attaque de la lèvre de la figure 3a et de la lèvre de la figure 3a,
- La figure 3d est une vue en perspective d'un deuxième mode de réalisation d'une lèvre d'un joint d'étanchéité conformément à la présente invention,
- La figure 4 est une vue en perspective d'un segment de joint d'étanchéité à double lèvre,
- La figure 5 est une vue en perspective montrant un segment de joint comportant des ouvertures de compensation conformément à la présente invention,
- Les figures 6a et 6b sont des vues en perspective respectivement de dessus et de coté de deux segments de joint adjacents conformément à la présente invention,
- La figure 7 est vue en perspective d'un troisième mode de réalisation d'une lèvre d'un joint d'étanchéité en tube fermé conformément à l'invention,
- La figure 8 est une vue en perspective d'une variante d'un joint d'étanchéité conformément à la présente invention,
- Les figures 9a à 9c sont des vues en coupe illustrant différentes étapes de mise en oeuvre du joint de la figure 8, et
- La figure 10 est une vue en perspective d'une section du joint de la figure 8.

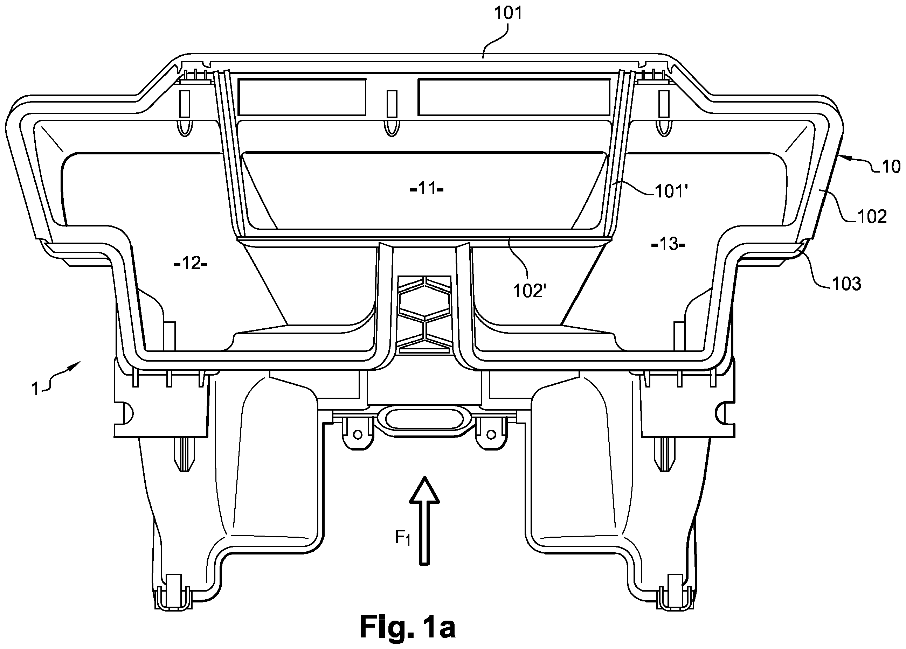

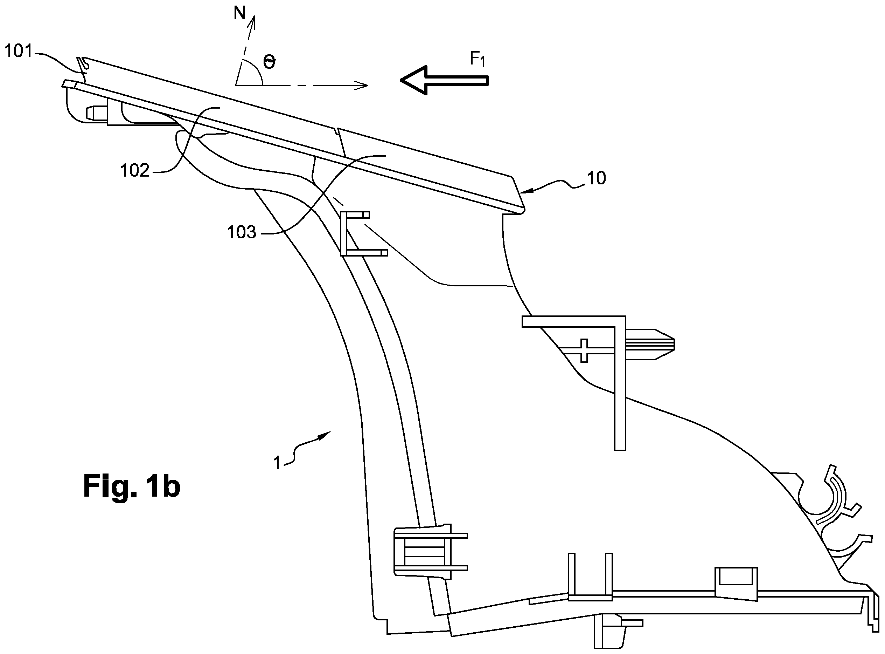

Les figures 1a et 1b sont respectivement des vues de dessus et de côté d'un boîtier répartiteur d'air muni d'un joint d'étanchéité conforme à l'invention. Sur les figures 1a et 1b, est illustré un boîtier répartiteur d'air 1, faisant partie intégrante d'un boîtier de climatisation, constituant un premier équipement destiné à être assemblé de manière étanche à deuxième équipement, non représenté sur les figures, comme par exemple une planche de bord et/ou un boîtier d'entrée d'air de véhicule automobile, comprenant une interface apte à accueillir le premier équipement.

Telle qu'indiqué sur la figure 1b, il est indiqué que l'assemblage est réalisé par accostage du deuxième équipement selon une direction d'accostage F1 faisant un angle d'accostage θ avec une normale N au plan de montage du boîtier répartiteur d'air 1.

L'exemple présente un mode de réalisation portant sur l'accostage d'un boitier répartiteur d'air 1 formant une partie d'un boîtier de climatisation. Néanmoins, la présente invention est applicable à tout autre sous-ensemble du boîtier de climatisation devant venir en contact par accostage avec une interface d'un véhicule automobile. De plus, la présente invention ne se limite pas aux équipements de climatisation et trouve une application dès lors qu'un équipement doit venir en contact par l'intermédiaire d'une interface avec un deuxième équipement par accostage et qu'une étanchéité est requise entre les deux équipements.

Comme on le voit plus particulièrement sur la figure 1a, l'étanchéité entre les deux équipements est réalisée au moyen d'un joint d'étanchéité 10. Le joint d'étanchéité 10 est constitué d'une pluralité de segments. Notamment, la pluralité de segments comprend des segments de joint 101, 102 et 103 agencés en périphérie du joint d'étanchéité 10, désignés par la suite en tant que segments de joint périphériques 101, 102 et 103, et des segments de joint 101' et 102' disposé à l'intérieur de la périphérie du joint d'étanchéité 10, désignés par la suite en tant que segments de joint intérieurs 101' et 102'.

Les segments de joint périphériques 101, 102 et 103 sont destinés à assurer l'étanchéité du premier équipement, en l'occurrence le boîtier répartiteur d'air 1, avec le deuxième équipement, en l'occurence la planche de bord et/ou le boîtier d'entrée d'air.

Les segments de joint intérieurs 101' et 102' complètent la fonction d'étanchéité entre les deux équipements. Ils assurent, par ailleurs, une fonction d'étanchéité interne afin d'éviter les échanges d'air entre des sorties d'air du boîtier répartiteur d'air 1. Notamment, les segments de joint intérieurs 101' et 102' permettent de créer une séparation étanche entre une sortie de dégivrage 11 et deux sorties d'aération 12 et 13, disposées de part et d'autre de la sortie de dégivrage 11, selon le présent exemple de réalisation.

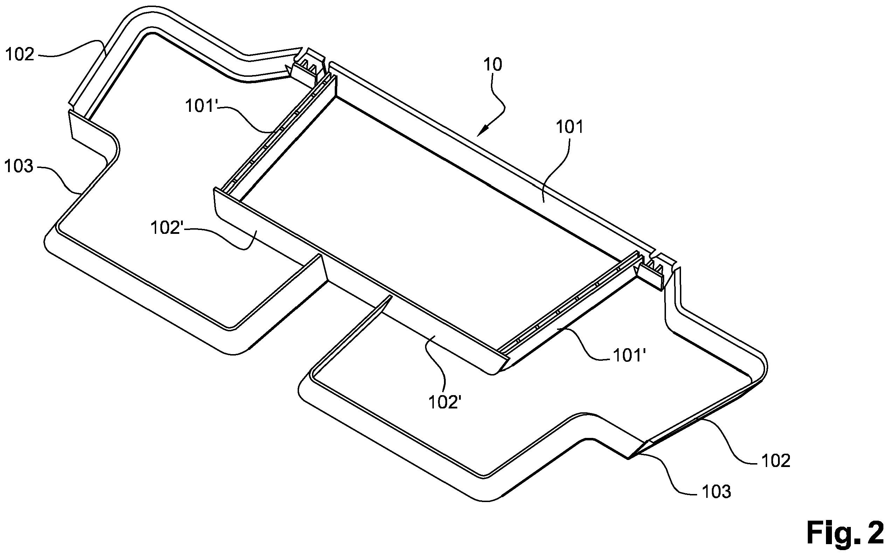

La figure 2 est une vue en perspective du joint d'étanchéité conforme à l'invention dans laquelle le boîtier répartiteur d'air 1 n'est pas représenté. Cette illustration permet de mieux identifier le joint d'étanchéité 10 et les divers segments de joints 101, 102, 103, 101' et 102' le constituant.

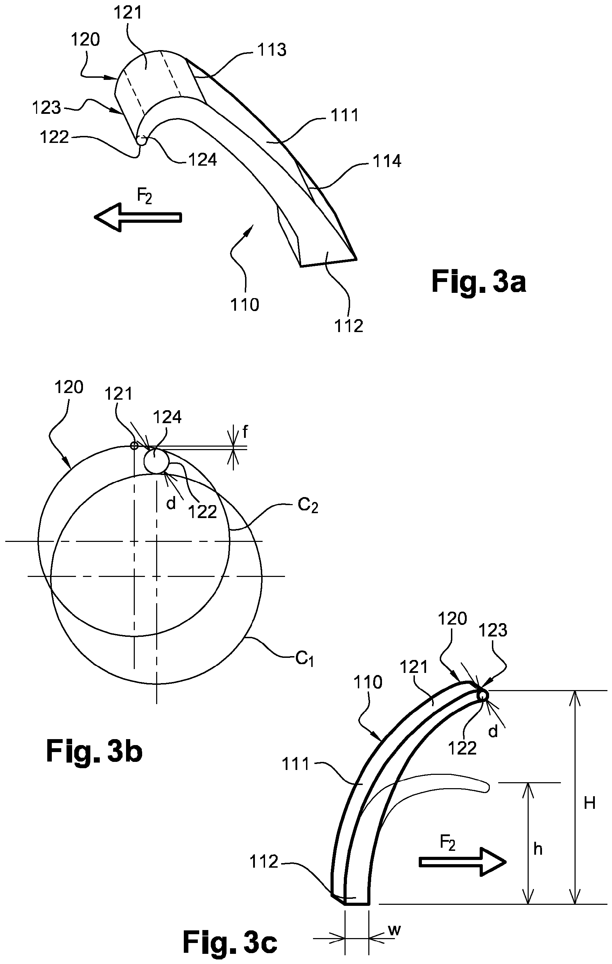

Tel qu'illustré sur les figures 1a et 1b, chaque segment de joint, que ce soit les segments de joints périphériques 101, 102 et 103 et/ou les segments de joint intérieurs 101' et 102', comprend au moins une lèvre 110. Un exemple de réalisation de lèvre 110 est présenté à la figure 3a.

La figure 3a est une vue en perspective d'un premier mode de réalisation d'une lèvre 110 d'un joint d'étanchéité conformément à l'invention. Comme le montre la figure 3a, la lèvre 110 présente un corps de lèvre 111 qui s'étend à partir d'un pied de lèvre 112 destiné à être fixé sur le premier équipement, en l'occurrence, dans l'exemple de réalisation de la figure 3a, le boîtier répartiteur d'air 1. Le mode de fixation de la lèvre 110 sur le boîtier répartiteur d'air 1 peut être par surmoulage, selon un exemple préférentiel de réalisation. Le corps de lèvre 111 de la lèvre 110 présente un profil sensiblement cylindrique incliné dont des génératrices sont représentées par une première ligne génératrice 113 et une deuxième ligne génératrice 114.

En phase d'accostage du premier équipement avec le deuxième équipement, le corps de lèvre 111 de la lèvre 110 est apte s'incliner. La direction d'inclinaison du corps de lèvre 111 par rapport au pied de lèvre 112 est indiquée par la flèche F2.

Au-delà de la première ligne génératrice 113, située en partie supérieure du corps de lèvre 111, le corps de lèvre 111 se prolonge dans la direction d'inclinaison F2 par un bord d'attaque 120 présentant une zone d'accostage 121 destinée à réaliser le contact de la lèvre 110 avec le deuxième équipement, en l'occurrence avec la planche de bord et/ou le boîtier d'entrée d'air, lors de l'assemblage des deux équipements entre eux. De façon préférentielle, la zone d'accostage 121 est une partie de la lèvre 110 se situant à une distance la plus éloignée du pied de lèvre 112 de la lèvre 110.

Comme cela a été mentionné précédemment, la lèvre 110 est réalisée dans un matériau plastique déformable, notamment en thermoplastique élastomère (TPE).

Il apparaît clairement sur les figures 1a et 1b que les segments de joint constituant dans leur ensemble le joint d'étanchéité 10, tels que les segments de joint périphériques 101, 102 et 103 et les segments de joint intérieurs 101' et 102', sont disposés de sorte que les corps de lèvre 111 correspondants sont tous aptes à se déformer dans la direction d'inclinaison F2 associée. La déformation des corps de lèvre 111 des segments de joint périphériques 101, 102 et 103 et des segments de joint intérieurs 101' et 102' dans la direction d'inclinaison F2 associée est assurée quelle que soit l'orientation de la direction d'accostage F1, c'est-à-dire pour toute valeur de l'angle d'accostage $\theta$, laquelle pouvant varier de 0 à 90°.

Ceci constitue une différence fondamentale avec les joints surmoulés de l'état de la technique tels que décrits qui exigent, au contraire, une direction d'accostage parfaitement déterminée. Grâce à l'invention, il est donc possible d'absorber sans difficulté toutes les instabilités mécaniques pouvant entraîner au montage des variations, mêmes importantes, de la direction d'accostage.

Cet avantage, lié en premier lieu à la position des segments de joint le long du joint d'étanchéité 10, peut être encore amplifié par l'effet de "tubage" conféré aux lèvres 110 des segments de joint. L'effet de "tubage" consiste, comme on peut le voir sur la figure 3a, à donner une section évolutive au profil du corps de lèvre 111. Le profil du corps de lèvre 111 va en diminuant du pied de lèvre 112 vers le bord d'attaque 120 de la lèvre 110.

Avec cette forme particulière de lèvre 110, le contact de la surface d'accostage du deuxième équipement au niveau de la zone d'accostage 121 oriente d'abord la déformation de la lèvre 110 dans le sens de la flexion dans la direction d'inclinaison F2. Puis, le profil évolutif du corps de lèvre 111 accompagne et poursuit la déformation donnée par le bord d'attaque 120.

On peut encore observer sur la figure 3a que le bord d'attaque 120 de la lèvre 110 présente également une zone anti-retournement 122. La zone anti-retournement 122 est disposée à une extrémité 123 de la lèvre 110 située à l'opposée du pied de lèvre 112 de la lèvre 110. La zone anti-retournement 122 dépasse, dans le sens d'évolution du profil du corps de lèvre 111, la zone d'accostage 121 et donc un point de contact entre la lèvre 110 et le deuxième équipement. La zone anti-retournement 122 empêche que la lèvre 110 soit retournée en cas de fortes fluctuations lors de la phase d'accostage. La zone anti-retournement 122 prolonge la zone d'accostage 121 et constitue un changement de direction de l'évolution du profil du corps de lèvre 111. La zone anti-retournement 122 est donc orientée en direction du pied de lèvre 112 du corps de lèvre 111.

On se réfère dorénavant aux figures 3b et 3c qui sont des schémas de dimensionnement respectivement du bord d'attaque 120 de la lèvre 110 de la figure 3a et de la lèvre 110 de la figure 3a.

Dans l'exemple de réalisation de la figure 3b, la zone anti-retournement 122 présente un profil circulaire. A cet égard, la figure 3b permet de donner des éléments de dimensionnement du bord d'attaque 120, de la zone d'accostage 121 et la zone anti-retournement 122.

Comme présenté par la figure 3b, l'extrémité 123 de la lèvre 110 est de forme circulaire de sorte que la zone anti-retournement 122 soit selon une section circulaire 124 ayant un diamètre 'd'. Plus particulièrement, le profil évolutif de la zone d'accostage 121 et de la zone anti-retournement 122 est défini par deux cercles C1 et C2 décentrés l'un par rapport à l'autre.

De plus, la zone anti-retournement 122 présente un décalage 'f' par rapport à la zone d'accostage 121. En particulier, le décalage 'f' entre la zone d'accostage 121 et le diamètre 'd' de la zone anti-retournement 122 est défini selon la relation :

$$0{,}5.d \leq f \leq 5.d$$

En se référant à la figure 3c, la lèvre 110 est montrée dans une position de repos (en traits forts sur la figure 3c), c'est-à-dire préalablement à toute étape d'accostage du premier équipement sur le deuxième équipement, et dans une position fléchie après accostage (en traits fins sur la figure 3c).

Selon la présente invention, le pied de lèvre 112 de la lèvre 110 a une largeur 'w' et présente une hauteur de repos 'H' et une hauteur de flexion 'h'. La lèvre 110 présente un taux de compression 'ρ'.

Il est possible de définir le dimensionnement global de la lèvre 110 par les relations entre différents paramètres indiqués donnant les meilleurs résultats comme suit :

$$w = 10.(h/H), \qquad 0.1 \leq h/H \leq 0.5 \qquad \text{et} \qquad h = H.\rho$$

où

d       est le diamètre de la zone anti-retournement 122 de la lèvre 110,
w est    la largeur du pied 112 de la lèvre 110,
H       est la hauteur de repos de la lèvre 110,
h       est la hauteur de flexion de lèvre 110, et
ρ       est le taux de compression de la lèvre 110.

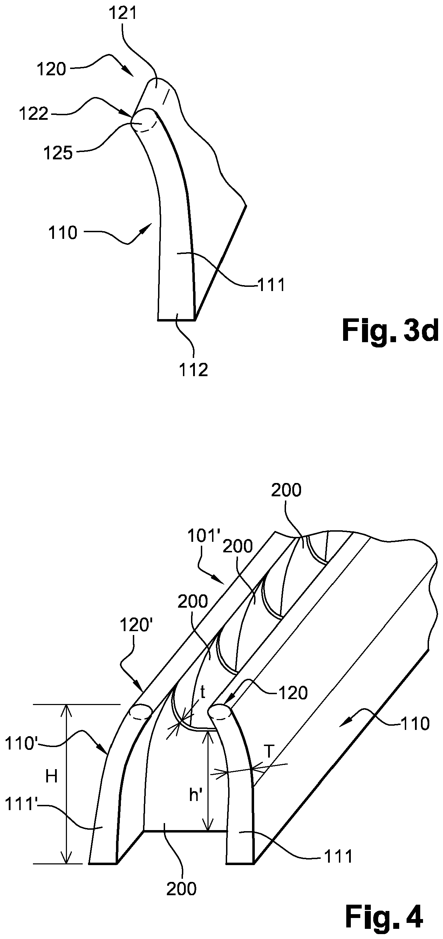

La figure 3d illustre une vue en perspective d'une variante de réalisation d'un joint d'étanchéité conformément à la présente invention. Selon ce second mode de réalisation, la zone d'accostage 121 et la zone anti-retournement 122 sont inscrites dans un profil elliptique 125.

Le profil elliptique 125 se retrouve dans l'exemple de segment de joint d'étanchéité 10 de la figure 4 qui présente une vue en perspective d'un segment de joint d'étanchéité à double lèvre conformément à la présente invention.

La figure 4 illustre, par exemple, la structure du segment de joint intérieur 101'. Le segment de joint 101' comprend deux lèvres 110 et 110' s'étendant parallèlement l'une à l'autre.

La lèvre 110, respectivement 110', comprend un pied de lèvre 112, respectivement 112', un corps de lèvre 111, respectivement 111', et un bord d'attaque 120, respectivement 120'. Les bords d'attaque 120 et 120' des deux lèvres 110 et 110' sont disposés en regard l'un de l'autre.

Ce type de segments de joint 101' est bien adapté pour réaliser l'étanchéité entre deux sorties différentes du boîtier répartiteur d'air 1, comme montré sur la figure 1a, tandis que les segments de joint à une seule lèvre sont plus appropriés pour réaliser l'étanchéité à la périphérie du boîtier répartiteur d'air 1.

La figure 4 montre également que des parois transversales 200. Les parois transversales 200 relient les corps de lèvres 111 et 111' des deux lèvres 110 et 110'. Les parois transversales 200 forment des chicanes entre les corps de lèvres 111 et 111' des lèvres 110 et 110'.

De façon avantageuse, les chicanes sont espacées, par exemple, d'un pas allant de une à deux fois la distance entre les lignes génératrices des deux lèvres 110 et 110'. Un tel agencement permet d'améliorer l'étanchéité et de maintenir la symétrie de déformation des lèvres 110 et 110' lors de l'accostage.

Les parois transversales 200 présentent une hauteur médiane 'h", une épaisseur 't'. Par ailleurs, les lèvres 110 et 110' présentent une épaisseur de paroi à mi-hauteur 'T'.

Un dimensionnement possible pour le segment de joint 101' de joint est donné par les relations suivantes :

$$h' = 2/3.H \quad et \quad t = 1/3.T$$

où

H    est la hauteur de repos de la lèvre 110, respectivement 110',
h'    est la hauteur médiane de la paroi transversale 200,
t    est l'épaisseur de la paroi transversale 200, et
T    est l'épaisseur à mi-hauteur de lèvre 110, respectivement 110'.

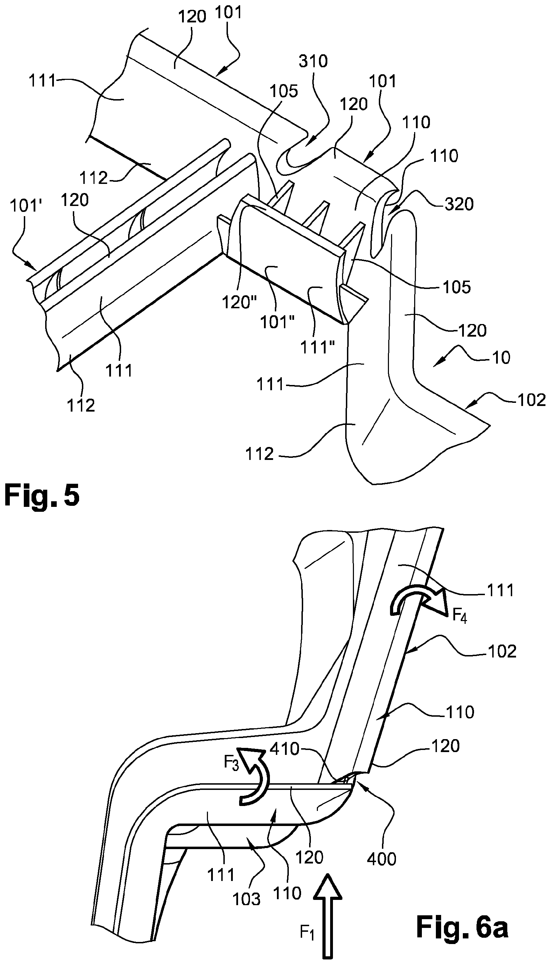

La figure 5 est une vue en perspective montrant un segment de joint d'étanchéité comportant des ouvertures de compensation conforme à la présente invention. La figure 5 illustre une disposition particulièrement avantageuse de l'invention visant à remédier, notamment, à des défauts de planéité de la surface d'accostage du deuxième équipement, en l'occurrence de la planche de bord et/ou le boîtier d'entrée d'air, pouvant entraîner des fuites importantes et donc affecter gravement l'étanchéité de l'assemblage des deux équipements.

A cet effet, il est prévu de pratiquer à un endroit approprié de la lèvre 110 d'un segment de joint périphérique 101 une ou plusieurs ouvertures de compensation 310 et 320. Les ouvertures de compensation 310 et 320 permettent une compensation du défaut de planéité. Il ressort que les ouvertures de compensation 310 et 320 apportent au segment de joint 101 la souplesse nécessaire permettant à la lèvre 110 de s'appliquer au mieux contre la surface d'accostage du deuxième équipement, ici la planche de bord et/ou le boîtier d'entrée d'air.

Bien entendu, l'étanchéité du joint au niveau des ouvertures de compensation 310 et 320 n'est optimale. Pour remédier à cette situation, on peut, comme le montre la figure 5, placer un segment de joint auxiliaire d'étanchéité 101" en regard des ouvertures de compensation 310 et 320.

Dans l'exemple de réalisation de la figure 5, le segment de joint auxiliaire d'étanchéité 101" constitue avec la lèvre 110 un caisson à double lèvre chicané du type de celui décrit en référence à la figure 4. Ainsi, les ouvertures de compensation 310 et 320 sont agencées dans le segment de joint périphérique 101 qui fait face au segment de joint auxiliaire d'étanchéité 101". Des nervures 105, assimilables aux parois transversales 200 relient le segment de joint périphérique 101 et le segment de joint auxiliaire d'étanchéité 101 ". Les nervures 105 peuvent présenter les mêmes propriétés dimensionnelles que les parois transversales 200.

La particularité du segment de joint auxiliaire d'étanchéité 101" réside dans l'orientation du bord d'attaque 120" du segment de joint auxiliaire d'étanchéité 101" et du profil de du corps de lèvre 111" du segment de joint auxiliaire d'étanchéité 101 ". En effet, contrairement au segment de joint intérieur 101' selon la figure 4, le segment de joint auxiliaire d'étanchéité 101" est tel que l'orientation de son bord d'attaque 120" et du profil de son corps de lèvre 111" est dans la même direction que l'orientation du bord d'attaque 120 et du profil du corps de lèvre 111 du segment de joint périphérique 101.

De façon particulièrement avantageuse, ses orientations sont identiques de telle sorte que le bord d'attaque 120" du segment de joint auxiliaire d'étanchéité 101" soit parallèle au bord d'attaque 120 du segment de joint périphérique 101 et le corps de lèvre 111" du segment de joint auxiliaire d'étanchéité 101" soit parallèle au corps de lèvre 111 du segment de joint périphérique 101.

Un autre moyen d'assurer l'étanchéité des ouvertures de compensation 310 et 320, non représenté, est de munir les ouvertures de compensation 310 et 320 d'un film souple d'étanchéité permettant à la fois d'empêcher toute fuite à travers la lèvre 110 tout en conservant aux ouvertures 310 et 320 la souplesse nécessaire, notamment à la compensation des défauts de planéité.

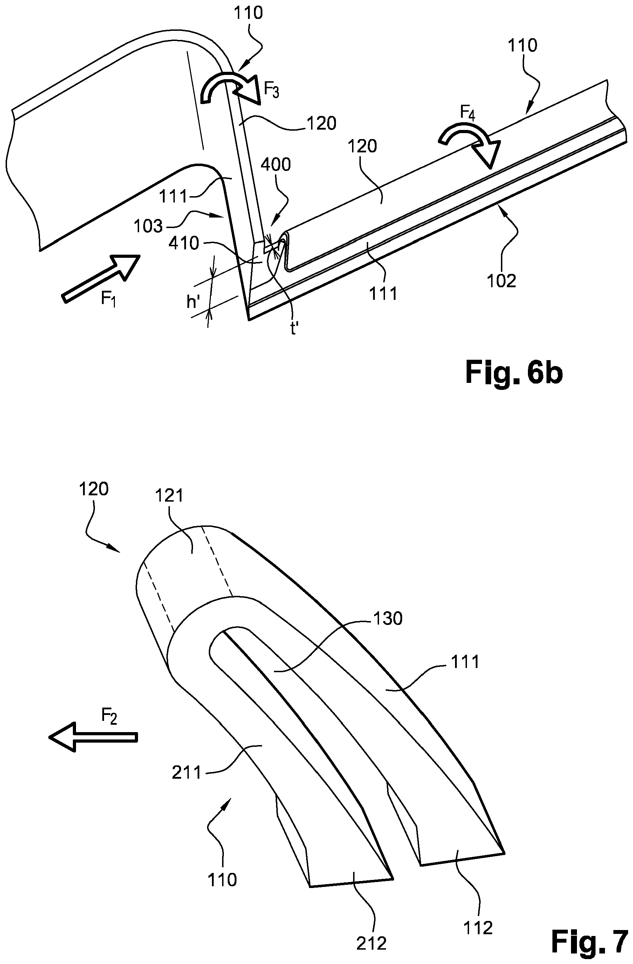

La cinématique de déformation entre deux segments de joint adjacents, tels que les segments de joint périphériques 102 et 103 de la figure 1a, est expliquée en relation avec les figures 6a et 6b.

La figure 6a est une vue en perspective de dessus de deux segments de joint 102 et 103 adjacents conformément à la présente invention. La figure 6b est une deuxième vue en perspective de coté des segments de joint 102 et 103 de la figure 6a.

Lors de l'accostage du premier équipement, typiquement le boite répartiteur d'air 1, au deuxième équipement, en l'occurrence la planche de bord et/ou le boîtier d'entrée d'air, dans la direction d'accostage F1, la lèvre 110 du segment de joint périphérique 103 fléchit dans le sens de la flèche F3, définissant une première direction de flexion F3, conformément au mécanisme général de déformation qui a été décrit précédemment, à savoir orientation de la flexion par le bord d'attaque 120 du segment de joint périphérique 103 et accompagnement de la flexion par la section évolutive du profil du corps de lèvre 111 du segment de joint périphérique 103.

Afin d'éviter que la liaison entre le segment de joint périphérique 103 et le segment de joint périphérique 102 adjacent vienne perturber la flexion du segment de joint périphérique 103, une découpe 400 est prévue à l'intersection entre le segment de joint périphérique 103 et le segment de joint périphérique 102. La découpe 400 est ménagée le long du corps de la lèvre 111 du segment de joint périphérique 103.

Dans le même temps, le segment de joint périphérique 102 fléchit à son tour dans le sens de la flèche F4, définissant une deuxième direction de flexion F4, par la combinaison de deux actions : d'une part, l'accostage proprement dit sur le bord d'attaque 120 du segment de joint périphérique 102 suivi de la flexion du corps de lèvre 111 du segment de joint périphérique 102, et, d'autre part, l'effet d'entraînement de la lèvre 110 du segment de joint périphérique 103 venant au contact de la lèvre 110 du segment de joint périphérique 102.

Afin de garantir l'étanchéité entre les deux lèvres 110 des segments de joint périphérique 102 et 103, une paroi d'étanchéité 410 peut être ajoutée dans la découpe 400.

La paroi d'étanchéité 410 présente une hauteur médiane 'h''', une épaisseur 't''. Par ailleurs, la lèvre 110 présentent une épaisseur de paroi à mi-hauteur 'T'.

Un dimensionnement favorable pour la paroi d'étanchéité 410 est donné par les relations suivantes :

$$0,3.H \leq h'' \leq 0,8.H \quad \text{et} \quad 0,3.T \leq t' \leq 0,7.T$$

où

H     est la hauteur de repos de la lèvre 110,
h''    est la hauteur médiane de la paroi d'étanchéité 410,
t'     est l'épaisseur de la paroi d'étanchéité 410, et
T     est l'épaisseur à mi-hauteur de lèvre 110.

Signalons qu'en dehors de ces intervalles définis pour 'h''' et 't'', l'étanchéité à l'air n'est pas garantie dû à la rigidification ou du manque de structure de liaison, créant un "soufflet" sous l'effet d'écrasement, accompagné d'un impact acoustique sous forme de sifflement.

On se reporte enfin à la figure 7 qui est vue en perspective d'un troisième mode de réalisation d'une lèvre d'un joint d'étanchéité en tube fermé conforme à l'invention.

La figure 7 illustre un autre moyen d'absorber sans dommage des mouvements aléatoires de montage, sous l'effet combiné de la pression et de mouvements aléatoires de montage dans les trois dimensions de l'espace, pouvant provoquer le rabattement de la lèvre 110 dans le sens contraire à la direction d'inclinaison F2.

Selon cette alternative, il s'agit de prolonger le bord d'attaque 120 de la lèvre 110 vers le pied de lèvre 112 de manière à constituer un tube fermé 130.

Ainsi, la lèvre 110, selon le troisième exemple de réalisation, comporte un premier et deuxième pieds 112 et 212 en liaison avec le premier équipement, en l'occurrence le boîtier répartiteur d'air 1.

La lèvre 110 comprend, de façon analogue à l'exemple de la figure 3a, un premier corps de lèvre 111 qui s'étend à partir du premier pied de lèvre 112. Le corps de lèvre 111 se prolonge dans la direction d'inclinaison F2 par un bord d'attaque 120 présentant une zone d'accostage 121 destinée à réaliser le contact de la lèvre 110 avec le deuxième équipement, en l'occurrence avec la planche de bord et/ou le boîtier d'entrée d'air lors de l'assemblage des deux équipements entre eux.

Le mode de réalisation de la figure 7 se distingue de la lèvre selon la figure 3a par la présente d'un deuxième corps de lèvre 211 s'étendant depuis le bord d'attaque 120 de la lèvre 110 vers le deuxième pied 212. Le deuxième corps de lèvre 211 est par ailleurs en liaison avec le deuxième pied 212. La lèvre 110 forme ainsi un tube fermé 130.

Selon cette variante, le deuxième corps de lèvre 211 joue le rôle d'une retenue du bord d'attaque 120 en cas d'effort exercé sur la lèvre 110 visant à retourner le joint d'étanchéité.

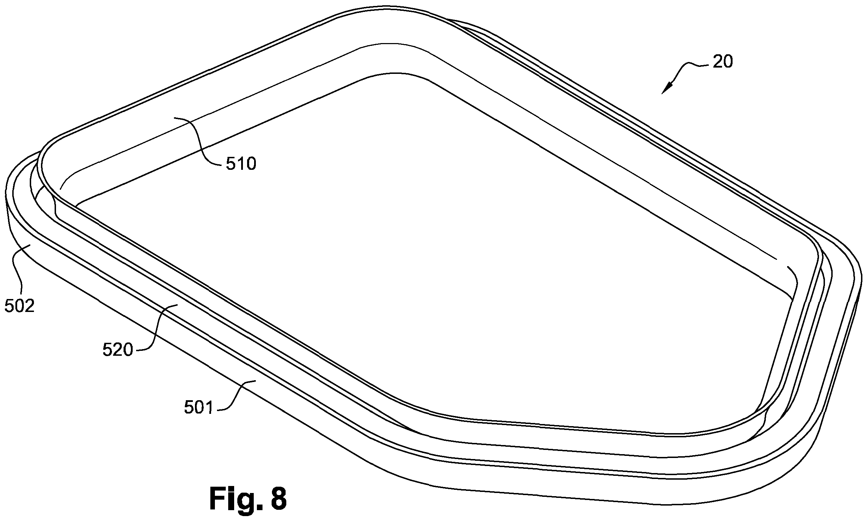

La figure 8 est une vue en perspective d'une variante d'un joint d'étanchéité conformément à la présente invention. Sur la figure 8 est représenté un joint d'étanchéité 20 constituant une variante du joint d'étanchéité 10 montré sur la figure 1.

Le joint d'étanchéité 20 comporte des segments linéaires 501 et des segments d'angle 502. Comme on peut le voir sur la figure 8, 9a à 9c et 10, un segment de joint qu'il s'agisse d'un segment linaire 501 ou d'un segment d'angle 502, comporte deux lèvres, à savoir, d'une part, une lèvre principale 510, du même type que les lèvres 110 et 110' présentées sur les figures 3a à 3d et en figure 4, et, d'autre part, une lèvre secondaire 520 également en matériau déformable, disposée parallèlement à la lèvre principale 510.

D'une manière similaire à la lèvre principale 510, la lèvre secondaire 520 présente un corps de lèvre 511 qui s'étend depuis un pied de lèvre 512, destiné à être fixé au boîtier répartiteur d'air 1, à l'intérieur du profil cylindrique de la lèvre principale 510 selon un profil également cylindrique incliné dans une deuxième direction d'inclinaison F5 opposée à la direction d'inclinaison F2 de la lèvre principale 510.

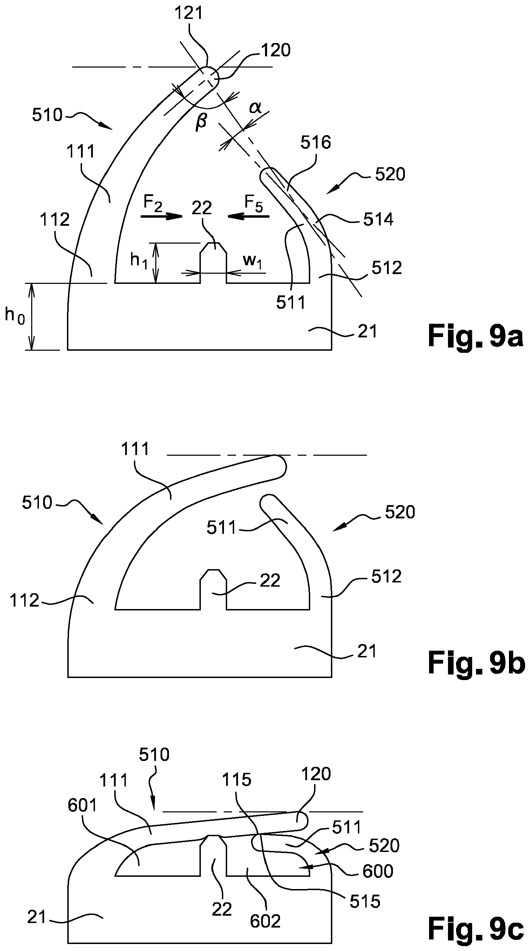

Les figures 9a à 9c sont des vues en coupe illustrant différentes étapes de mise en oeuvre du joint d'étanchéité de la figure 8. Ainsi que le montrent les figures 9a à 9c, la lèvre principale 510 et la lèvre secondaire 520 sont configurées de sorte que, lors de l'accostage du deuxième équipement sur la zone d'accostage 121 du bord d'attaque 120 de la lèvre principale 510, le corps de lèvre 511 de la lèvre secondaire 520 se déforme par flexion dans la deuxième direction d'inclinaison F5 sous l'effort d'écrasement exercé par le corps de lèvre 111 de la lèvre principale 510, lequel recouvre alors le corps de lèvre 511 de la lèvre secondaire 520.

Comme l'indique la figure 9c, à l'issue de l'accostage, la lèvre principale 510 et la lèvre secondaire 520 forment à l'intérieur des segments de joint un ensemble tubulaire 600 fermé de manière étanche du fait que le corps de lèvre 511 de la lèvre secondaire 520 exerce une force d'appui sur le corps de lèvre 111 de la lèvre principale 510 par rappel de flexion élastique. L'ensemble tubulaire 600 forme alors une barrière acoustique apte à absorber les bruits générés par les composants du boîtier répartiteur d'air 1 et empêcher qu'ils ne se propagent à l'intérieur de l'habitacle du véhicule.

De plus, la lèvre principale 510 étant contrainte en appui contre la paroi du deuxième équipement par la force de rappel élastique de flexion exercée par la lèvre secondaire 520, le contact est amélioré entre la lèvre principale 510 et la surface d'accostage du deuxième équipement, ce qui augmente l'étanchéité du joint et réduit les bruits acoustiques pouvant résulter d'un défaut d'étanchéité à ce niveau.

Comme le montre la figure 8, selon un exemple particulièrement avantageux, la lèvre principale 510 est disposées sur le segment de joint agencé sur l'intérieur du joint 20, alors que la lèvre secondaire 520 est disposée sur le segment de joint agencé sur l'extérieur du joint 20.

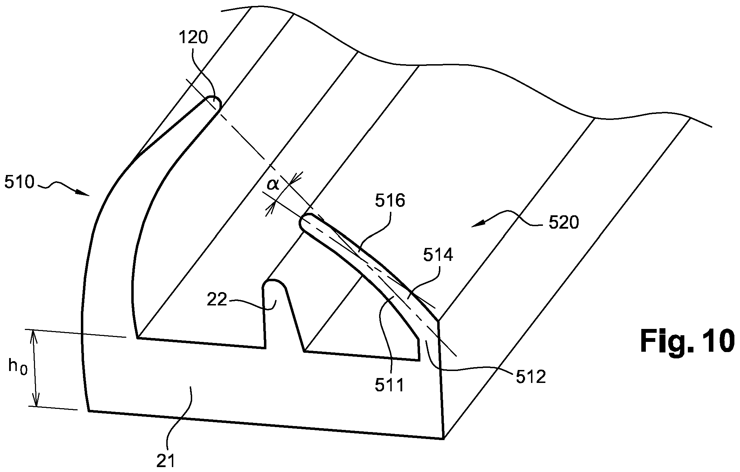

La figure 10 est une vue en perspective d'une section du joint de la figure 8.

Les figures 9a et 10 montrent que le profil cylindrique du corps de lèvre 511 de la lèvre secondaire 520 présente une partie proximale 514 dirigée vers le bord d'attaque 120 de la lèvre principale 510, l'angle $\beta$ entre la partie proximale 514 et le bord d'attaque 120 étant de préférence supérieur ou égal à 90°. On garantit de cette manière que, lors de l'accostage, la lèvre principale 510 puisse recouvrir la lèvre secondaire 520 et la contraindre à fléchir vers l'intérieur du joint d'étanchéité 20, sans qu'elle puisse se retourner vers l'extérieur.

D'autre part, le profil cylindrique du corps de lèvre 511 de la lèvre secondaire 520 présente une partie distale 516 inclinée par rapport à la partie proximale 514 dans la deuxième direction d'inclinaison F5 de la lèvre secondaire 520. L'angle $\alpha$ entre la partie proximale 514 et la partie distale 516 de la lèvre secondaire 520 varie par exemple entre 5 et 15°. Ces dispositions présentent l'avantage de faciliter l'engagement de la lèvre secondaire 520 sous la lèvre principale 510 lors de l'accostage du deuxième équipement.

Sur les figures 9a à 9c et 10, on peut voir que, pour augmenter l'absorption des bruits acoustiques par le joint d'étanchéité 20, les pieds de lèvre 112 et 512 respectifs de la lèvre principale 510 et de la lèvre secondaire 520 sont réunis en une base unique 21. La base unique 21 forme une barrière acoustique caractérisée par sa hauteur $h_0$ qui s'ajoute à celle réalisée par l'ensemble tubulaire 600 constitué par la lèvre principale 510 et la lèvre secondaire 520 après accostage.

Comme le montrent les figures 9a à 9c et 10, une nervure centrale 22 est ménagée longitudinalement sur la base unique 21 de manière à délimiter, dans l'ensemble tubulaire 600, deux tubes 601 et 602 séparés par la nervure centrale 22, ceci de manière à augmenter l'absorption acoustique du joint d'étanchéité 20 en multipliant le nombre de barrières acoustiques. Bien entendu, on pourrait ménager deux ou plus nervures de ce type.

On notera que la nervure centrale 22 forme une butée pour la lèvre principale 510 lors de l'accostage du deuxième équipement. Le corps de lèvre 111 de la lèvre principale 510 est ainsi soumis de la part de la nervure centrale 22 à une contrainte qui augmente la force de contact de la lèvre contre la surface d'accostage du deuxième équipement. Il en résulte une meilleure étanchéité du joint d'étanchéité 20.

Afin de faciliter le glissement de la lèvre principale 510 et de la lèvre secondaire 520 l'une sur l'autre, les corps de lèvre 111 et 511 respectifs de la lèvre principale 510 et de la lèvre secondaire 520 présentent des zones de contact 115 et 515 respectifs portant un traitement anti-friction.

En particulier, le traitement antifriction consiste à conférer aux zones de contact 115 et 515 des états de surface de rugosité appropriée par sablage des parois correspondantes du moule. On peut également réaliser le joint dans un matériau thermoplastique élastomère contenant du siloxane.

Enfin, dans les segments d'angle 502, le corps de lèvre 111 de la lèvre principale 510 est rendu plus long, dans la direction d'extension du corps de lèvre 111, que dans les segments linéaires 501 afin d'éviter que le raccourcissement de la lèvre dans cette zone, notamment par contraction, n'empêche le recouvrement de la lèvre secondaire 520 par la lèvre principale 510 lors de l'accostage.

La présente invention est particulièrement adaptée à un joint permettant d'assurer une étanchéité entre, notamment, un boîtier répartiteur d'air et une planche de bord et/ou un boîtier d'entrée d'air d'un équipement de climatisation.

Bien évidemment, l'invention n'est pas limitée aux modes de réalisation décrits précédemment et fournis uniquement à titre d'exemple et englobe d'autres variantes que pourra envisager l'homme du métier dans le cadre de la présente invention et notamment toutes combinaisons des différents modes de réalisation décrits précédemment.

**Revendications**

1. Dispositif d'étanchéité comprenant un Joint d'étanchéité (10, 20), un premier équipement (1), un deuxième équipement, le premier équipement (1) portant le joint d'étanchéité (10, 20), et le deuxième équipement étant destiné à venir en contact avec le joint d'étanchéité (10, 20) par accostage selon une direction d'accostage (F1) donnée, le joint d'étanchéité (10, 20) étant constitué d'une pluralité de segments de joint (101, 102, 103, 101', 102', 501, 502) comprenant, chacun, au moins une lèvre (110, 110', 510) en matériau déformable, la lèvre (110, 110', 510) présentant :

   - un corps de lèvre (111, 111', 111 ", 511) s'étendant, depuis un pied (112, 112', 512) fixé au premier équipement (1), selon un profil cylindrique incliné dans une direction d'inclinaison (F2) donnée,
   - un bord d'attaque (120, 120', 120") prolongeant le corps de lèvre (110, 110', 510) dans la direction d'inclinaison (F2) donnée, le bord d'attaque (120, 120', 120") présentant une zone d'accostage (121) destinée à réaliser le contact avec le deuxième équipement,

   les segments de joint (101, 102, 103, 101', 102', 501, 502) étant disposés de sorte que, pour toute orientation (θ) de la direction d'accostage (F1) du deuxième équipement, les corps de lèvre (111, 111', 111 ", 511) des segments de joint (101, 102, 103, 101', 102', 501, 502) sont aptes à se déformer par flexion dans la direction d'inclinaison (F2) associée et dans lequel les segments de joint (501, 502) comprennent, chacun,

   - d'une part, la lèvre (510) en matériau déformable, dite lèvre principale, et,
   - d'autre part, une lèvre secondaire (520) en matériau déformable et présentant un corps de lèvre (511) s'étendant, depuis un pied de lèvre (512) fixé au premier équipement (1), à l'intérieur du profil cylindrique de la lèvre principale (510) selon un profil cylindrique incliné dans une deuxième direction d'inclinaison (F5) opposée à la direction d'inclinaison (F2) de la lèvre principale (510),

   de sorte que, lors d'un accostage du deuxième équipement, le corps de lèvre (511) de la lèvre secondaire (510) se déforme par flexion dans la deuxième direction d'inclinaison (F5) sous l'effort d'écrasement exercé par le corps de lèvre (111) de la lèvre principale (510),
   dans lequel les pieds de lèvre (111, 511) des lèvres principale (510) et secondaire (520) sont réunis en une base unique (21), et dans lequel la base unique (21) porte au moins une nervure centrale (22) sur laquelle la lèvre principale (510) vient en appui lors de l'accostage du deuxième équipement sur la lèvre principale (510).

2. Dispositif d'étanchéité selon la revendication 1, dans lequel le profil cylindrique du corps de lèvre (111, 111', 111") présente une section évolutive, diminuant du pied (112, 112') du corps de lèvre (111, 111', 111") vers le bord d'attaque (120, 120', 120").

3. Dispositif d'étanchéité selon l'une des revendications 1 ou 2, dans lequel le bord d'attaque (120, 120', 120") présente une zone anti-retournement (122) de la lèvre (110, 110') prolongeant la zone d'accostage (121) en direction du pied (112, 112') du corps de lèvre (111, 111', 111").

4. Dispositif d'étanchéité selon la revendication 3, dans lequel la zone anti-retournement (122) présente un profil circulaire.

5. Dispositif d'étanchéité selon la revendication 3, dans lequel la zone d'accostage (121) et/ou la zone anti-retournement (122) présentent un profil elliptique.

6. Dispositif d'étanchéité selon l'une quelconque des revendications 1 à 5, dans lequel la lèvre principale (510) et la lèvre secondaire (520) forment au moins un tube fermé (601, 602) à l'intérieur des segments de joint (501, 502).

7. Dispositif d'étanchéité selon l'une quelconque des revendications précédentes, dans lequel la lèvre principale (510) et la lèvre secondaire (520) sont respectivement disposées, sur les segments de joint (501, 502) agencés à l'intérieur et à l'extérieur du joint d'étanchéité (20).

8. Dispositif d'étanchéité selon l'une quelconque des revendications précédentes, dans lequel le profil cylindrique du corps de lèvre (511) de la lèvre secondaire (520) présente une partie proximale (514) dirigée vers le bord d'attaque (120) de la lèvre principale (510).

9. Dispositif d'étanchéité selon la revendication 8, dans lequel la partie proximale (514) fait avec le bord d'attaque (120) de la lèvre principale (510) un angle ($\beta$) supérieur ou égal à 90°.

10. Dispositif d'étanchéité selon la revendication 8 ou 9, dans lequel le profil cylindrique du corps de lèvre (511) de la lèvre secondaire (520) présente une partie distale (516) inclinée par rapport à la partie proximale (514) dans la deuxième direction d'inclinaison (F5) de la lèvre secondaire (520).

11. Dispositif d'étanchéité selon la revendication 10, dans lequel la partie distale (516) du corps de lèvre (511) de la lèvre secondaire (520) fait avec la partie proximale (514) du corps de lèvre (511) de la lèvre secondaire (520) un angle ($\alpha$) compris entre 5 et 15°.

12. Dispositif d'étanchéité selon l'une quelconque des revendications précédentes, dans lequel le profil cylindrique de la lèvre principale (510) est plus large dans la direction d'extension du corps de lèvre (111) dans un segment d'angle (502) que dans un segment linéaire (501).

13. Dispositif d'étanchéité selon l'une quelconque des revendications précédentes, dans lequel un des segments de joint (101, 102, 103, 101', 102', 501, 502) comporte au moins une ouverture de compensation (310, 320).

14. Dispositif d'étanchéité selon la revendication 13, dans lequel un segment de joint auxiliaire d'étanchéité (101") est placé en regard de l'ouverture de compensation (310, 320).

15. Dispositif d'étanchéité selon la revendication 13, dans lequel l'ouverture (310, 320) est munie d'un film souple d'étanchéité.

16. Dispositif d'étanchéité selon l'une quelconque des revendications précédentes, comprenant au moins un paire de segments de joint (101, 102, 103) adjacents, et dans lequel la lèvre (110) d'un segment de joint (102) comporte une découpe (400) ménagée le long du corps de lèvre (111) du segment de joint (102).

17. Dispositif d'étanchéité selon la revendication 16, dans lequel la découpe (400) comporte une paroi d'étanchéité (410) entre les segments de joint (102, 103) adjacent d'une même paire de segments de joint (102, 103).

18. Dispositif d'étanchéité l'une quelconque des revendications précédentes, dans lequel le bord d'attaque (120) de la lèvre (110) est prolongé par un deuxième corps de lèvre (211) vers un deuxième pied (212) fixé au premier équipement (1) afin de former un tube fermé (130).

19. Dispositif d'étanchéité selon l'une quelconque des revendications précédentes, dans lequel le joint d'étanchéité (10, 20) est en thermoplastique élastomère.


**Patentansprüche**

1. Dichtanordnung umfassend einen Dichtungsring (10, 20), eine erste Vorrichtung (1), eine zweite Vorrichtung, wobei die erste Vorrichtung (1) den Dichtungsring (10, 20) trägt, und die zweite Vorrichtung ausgebildet ist, durch Ankoppeln in einer vorgegebenen Ankoppelrichtung (F1) in Kontakt mit dem Dichtungsring (10, 20) zu kommen, wobei der Dichtungsring (10, 20) aus einer Mehrheit von Dichtsegmenten (101, 102, 103, 101', 102', 501, 502) umfassend jeweils wenigstens eine Lippe (110, 110', 510) aus verformbarem Material besteht, wobei die Lippe (110, 110', 510) Folgendes aufweist:

- einen sich von einem an der ersten Vorrichtung (1) befestigten Fuß (112, 112', 512) in einem in einer vorgegebenen Neigungsrichtung (F2) geneigten zylindrischen Profil erstreckenden Lippenkörper (111, 111', 111", 511),
- eine den Lippenkörper (110, 110', 510) in der vorgegebenen Neigungsrichtung (F2) verlängernde Vorderkante (120, 120', 120"), wobei die Vorderkante (120, 120', 120") einen zum Herstellen des Kontakts mit der zweiten Vorrichtung vorgesehenen Ankoppelbereich (121) aufweist,

wobei die Dichtsegmente (101, 102, 103, 101', 102', 501, 502) so angeordnet sind, dass für jede Ausrichtung ($\theta$) der Ankoppelrichtung (F1) der zweiten Vorrichtung die Lippenkörper (111, 111', 111", 511) der Dichtsegmente (101, 102, 103, 101', 102', 501, 502) sich durch Biegung in der entsprechenden Neigungsrichtung (F2) verformen können, und wobei die Dichtsegmente (501, 502) jeweils

- einerseits die Lippe (510) aus verformbarem Material, die sogenannte Hauptlippe, und
- andererseits eine Sekundärlippe (520) aus verformbarem Material und einen sich von einem an der ersten Vorrichtung (1) befestigten Lippenfuß (512) im Inneren des zylindrischen Profils der Hauptlippe (510) in einem in einer zweiten Neigungsrichtung (F5) entgegengesetzt zur Neigungsrichtung (F2) der Hauptlippe (510) geneigten zylindrischen Profil erstreckenden Lippenkörper (511) aufweisend, umfassen, so dass bei einem Ankoppeln der zweiten Vorrichtung der Lippenkörper (511) der Sekundärlippe (510) sich durch Biegung in der zweiten Neigungsrichtung (F5) unter der vom Lippenkörper (111) der Hauptlippe (510) ausgeübten Quetschkraft verformt,

wobei die Lippenfüße (111, 511) der Hauptlippe (510) und der Sekundärlippe (520) in einer einmaligen Basis (21) vereint sind, und wobei die einmalige Basis (21) wenigstens eine Mittelrippe (22) trägt, auf der sich die Hauptlippe (510) beim Ankoppeln der zweiten Vorrichtung auf der Hauptlippe (510) abstützt.

2. Dichtanordnung nach Anspruch 1, wobei das zylindrische Profil des Lippenkörpers (111, 111', 111") einen sich entwickelnden Querschnitt aufweist, der vom Fuß (112, 112') des Lippenkörpers (111, 111', 111") zur Vorderkante (120, 120', 120") abnimmt.

3. Dichtanordnung nach Anspruch 1 oder 2, wobei die Vorderkante (120, 120', 120") einen den Ankoppelbereich (121) in Richtung des Fußes (112, 112') des Lippenkörpers (111, 111', 111") verlängernden Umschlagschutzbereich (122) der Lippe (110, 110') aufweist.

4. Dichtanordnung nach Anspruch 3, wobei der Umschlagschutzbereich (122) ein kreisförmiges Profil aufweist.

5. Dichtanordnung nach Anspruch 3, wobei der Ankoppelbereich (121) und/oder der Umschlagschutzbereich (122) ein elliptisches Profil aufweisen.

6. Dichtanordnung nach einem der Ansprüche 1 bis 5, wobei die Hauptlippe (510) und die Sekundärlippe (520) wenigstens ein geschlossenes Rohr (601, 602) in den Dichtsegmenten (501, 502) bilden.

7. Dichtanordnung nach einem der vorausgehenden Ansprüche, wobei die Hauptlippe (510) und die Sekundärlippe (520) jeweils auf den innerhalb und außerhalb des Dichtungsrings (20) angeordneten Dichtsegmenten (501, 502) angeordnet sind.

8. Dichtanordnung nach einem der vorausgehenden Ansprüche, wobei das zylindrische Profil des Lippenkörpers (511) der Sekundärlippe (520) einen zur Vorderkante (120) der Hauptlippe (510) gerichteten proximalen Teil (514) aufweist.

9. Dichtanordnung nach Anspruch 8, wobei der proximale Teil (514) mit der Vorderkante (120) der Hauptlippe (510) einen Winkel ($\beta$) größer gleich 90° bildet.

10. Dichtanordnung nach Anspruch 8 oder 9, wobei das zylindrische Profil des Lippenkörpers (511) der Sekundärlippe (520) einen zum proximalen Teil (514) in der zweiten Neigungsrichtung (F5) der Sekundärlippe (520) geneigten distalen Teil (516) aufweist.

11. Dichtanordnung nach Anspruch 10, wobei der distale Teil (516) des Lippenkörpers (511) der Sekundärlippe (520) mit dem proximalen Teil (514) des Lippenkörpers (511) der Sekundärlippe (520) einen Winkel ($\alpha$) zwischen 5 und 15° bildet.

**12.** Dichtanordnung nach einem der vorausgehenden Ansprüche, wobei das zylindrische Profil der Hauptlippe (510) breiter in der Verlängerungsrichtung des Lippenkörpers (111) in einem Winkelsegment (502) als in einem linearen Segment (501) ist.

**13.** Dichtanordnung nach einem der vorausgehenden Ansprüche, wobei eines der Dichtsegmente (101, 102, 103, 101', 102', 501, 502) wenigstens eine Ausgleichsöffnung (310, 320) umfasst.

**14.** Dichtanordnung nach Anspruch 13, wobei ein Hilfsdichtsegment (101") gegenüber der Ausgleichsöffnung (310, 320) angeordnet ist.

**15.** Dichtanordnung nach Anspruch 13, wobei die Öffnung (310, 320) mit einem elastischen Dichtfilm ausgestattet ist.

**16.** Dichtanordnung nach einem der vorausgehenden Ansprüche, umfassend wenigstens ein Paar von angrenzenden Dichtsegmenten (101, 102, 103), wobei die Lippe (110) eines Dichtsegments (102) einen entlang des Lippenkörpers (111) des Dichtsegments (102) angeordneten Ausschnitt (400) umfasst.

**17.** Dichtanordnung nach Anspruch 16, wobei der Ausschnitt (400) eine Dichtwand (410) zwischen den Dichtsegmenten (102, 103) angrenzend an ein gleiches Paar von Dichtsegmenten (102, 103) umfasst.

**18.** Dichtanordnung nach einem der vorausgehenden Ansprüche, wobei die Vorderkante (120) der Lippe (110) durch einen zweiten Lippenkörper (211) zu einem an der ersten Vorrichtung (1) befestigten zweiten Fuß (212) verlängert ist, um ein geschlossenes Rohr (130) zu bilden.

**19.** Dichtanordnung nach einem der vorausgehenden Ansprüche, wobei der Dichtungsring (10, 20) aus einem Elastomer-Thermoplast besteht.

**Claims**

**1.** Sealing device comprising a seal (10, 20), a first item of equipment (1), a second item of equipment, the first item of equipment (1) bearing the seal (10, 20), and the second item of equipment being intended to come into contact with the seal (10, 20) by docking in a given docking direction (F1), the seal (10, 20) being made up of a plurality of seal segments (101, 102, 103, 101', 102', 501, 502) that each comprise at least one lip (110, 110', 510) made of deformable material, the lip (110, 110', 510) having:

   - a lip body (111, 111', 111", 511) that extends, from a root (112, 112', 512) fixed to the first item of equipment (1), along a cylindrical profile inclined in a given inclination direction (F2),
   - a leading edge (120, 120', 120") that continues the lip body (110, 110', 510) in the given inclination direction (F2), the leading edge (120, 120', 120") having a docking zone (121) that is intended to make contact with the second item of equipment,

the seal segments (101, 102, 103, 101', 102', 501, 502) being disposed such that, for any orientation (θ) of the docking direction (F1) of the second item of equipment, the lip bodies (111, 111', 111", 511) of the seal segments (101, 102, 103, 101', 102', 501, 502) are able to deform by bending in the associated inclination direction (F2), and wherein the seal segments (501, 502) each comprise,

   - for the one part, the lip (510) made of deformable material, known as main lip, and,
   - for the other part, a secondary lip (520) made of deformable material and having a lip body (511) that extends from a lip root (512) fixed to the first item of equipment (1), on the inside of the cylindrical profile of the main lip (510) along a cylindrical profile inclined in a second inclination direction (F5) opposite to the inclination direction (F2) of the main lip (510),

such that, during docking of the second item of equipment, the lip body (511) of the secondary lip (510) deforms by bending in the second inclination direction (F5) under the compressive force exerted by the lip body (111) of the main lip (510), wherein the lip roots (111, 511) of the main lip (510) and secondary lip (520) are combined in a single base (21), and wherein the single base (21) bears at least one central rib (22) against which the main lip (510) bears during the docking of the second item of equipment on the main lip (510).

2. Sealing device according to Claim 1, wherein the cylindrical profile of the lip body (111, 111', 111") has a non-constant cross section that decreases from the root (112, 112') of the lip body (111, 111', 111") towards the leading edge (120, 120', 120").

3. Sealing device according to either of Claims 1 and 2, wherein the leading edge (120, 120', 120") has an anti-roll zone (122) of the lip (110, 110') continuing the docking zone (121) in the direction of the root (112, 112') of the lip body (111, 111', 111").

4. Sealing device according to Claim 3, wherein the anti-roll zone (122) has a circular profile.

5. Sealing device according to Claim 3, wherein the docking zone (121) and/or the anti-roll zone (122) have an elliptical profile.

6. Sealing device according to any one of Claims 1 to 5, wherein the main lip (510) and the secondary lip (520) form at least one closed tube (601, 602) inside the seal segments (501, 502).

7. Sealing device according to any one of the preceding claims, wherein the main lip (510) and the secondary lip (520) are disposed on the seal segments (501, 502) arranged inside and outside the seal (20), respectively.

8. Sealing device according to any one of the preceding claims, wherein the cylindrical profile of the lip body (511) of the secondary lip (520) has a proximal part (514) directed towards the leading edge (120) of the main lip (510).

9. Sealing device according to Claim 8, wherein the proximal part (514) makes an angle ($\beta$) greater than or equal to 90° with the leading edge (120) of the main lip (510).

10. Sealing device according to Claim 8 or 9, wherein the cylindrical profile of the lip body (511) of the secondary lip (520) has a distal part (516) that is inclined with respect to the proximal part (514) in the second inclination direction (F5) of the secondary lip (520).

11. Sealing device according to Claim 10, wherein the distal part (516) of the lip body (511) of the secondary lip (520) makes an angle ($\alpha$) of between 5 and 15° with the proximal part (514) of the lip body (511) of the secondary lip (520).

12. Sealing device according to any one of the preceding claims, wherein the cylindrical profile of the main lip (510) is wider in the direction of extension of the lip body (111) in a corner segment (502) than in a linear segment (501).

13. Sealing device according to any one of the preceding claims, wherein one of the seal segments (101, 102, 103, 101', 102', 501, 502) has at least one compensation opening (310, 320).

14. Sealing device according to Claim 13, wherein an auxiliary seal segment (101") is positioned facing the compensation opening (310, 320).

15. Sealing device according to Claim 13, wherein the opening (310, 320) is provided with a flexible sealing film.

16. Sealing device according to any one of the preceding claims, which comprises at least one pair of adjacent seal segments (101, 102, 103), and in which the lip (110) of one seal segment (102) has a cutout (400) made along the lip body (111) of the seal segment (102).

17. Sealing device according to Claim 16, wherein the cutout (400) has a sealing wall (410) between the adjacent seal segments (102, 103) of one and the same pair of seal segments (102, 103).

18. Sealing device according to any one of the preceding claims, wherein the leading edge (120) of the lip (110) is continued by a second lip body (211) towards a second root (212) fixed to the first item of equipment (1) so as to form a closed tube (130).

19. Sealing device according to any one of the preceding claims, wherein the seal (10, 20) is made of thermoplastic elastomer.

Fig. 1a

Fig. 1b

Fig. 2

**Fig. 3a**

**Fig. 3b**

**Fig. 3c**

**Fig. 3d**

**Fig. 4**

**Fig. 5**

**Fig. 6a**

**Fig. 6b**

**Fig. 7**

22

**Fig. 8**

EP 2 396 573 B1

**Fig. 9a**

**Fig. 9b**

**Fig. 9c**

**Fig. 10**

EP 2 396 573 B1

**EP 2 396 573 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2768101